# EUROPÄISCHE PATENTSCHRIFT

(11) **EP 0 793 598 B1**
(45) Veröffentlichungstag und Bekanntmachung des Hinweises auf die Patenterteilung: **15.04.1998**
(21) Anmeldenummer: 95901430.9
(22) Anmeldetag: 25.11.1994
(51) Int. Cl.: B64C 1/22, A61G 3/02

(54) **EINLADEVORRICHTUNG FÜR DIE HUMANITÄRE LUFTFAHRT**
LOADING DEVICE FOR AIR AMBULANCE MISSIONS
DISPOSITIF DE CHARGEMENT POUR MISSIONS AERIENNES D'EVACUATION DE PERSONNES

(43) Veröffentlichungstag der Anmeldung: 10.09.1997
(73) Patentinhaber: Aero-Dienst GmbH, 90411 Nürnberg (DE)
(72) Erfinder: WOLFRUM, Ernst, D-91233 Neunkirchen (DE); SPECHT, Klaus, Dietrich, D-86568 Motzenhofen (DE)
(74) Vertreter: Hofmann, Gerhard, Dipl.-Ing. Patentassessor
(86) Internationale Anmeldenummer: EP9403897
(87) Internationale Veröffentlichungsnummer: WO9616867

(56) Entgegenhaltungen:
- AU-B- 605 680
- DE-A- 1 160 138
- FR-A- 2 553 046
- FR-A- 2 682 930

## Beschreibung

Die Erfindung bezieht sich auf eine Einladevorrichtung für die humanitäre Luftfahrt nach dem Oberbegriff des Anspruchs 1.

In der humanitären Luftfahrt, insbesondere beim Patientenrückholdienst, werden in Geschäftsreiseflugzeugen oder auch Hubschraubern Patienten auf Tragen befördert. Problematisch ist der Patiententransport vom Landeplatz in das Luftfahrzeug ebenso die Entladung. Kritisch hierbei ist die sehr schmale Einstiegsluke durch die die Trage mit dem Patienten bei Überwindung der Höhendifferenz zwischen dem Landeplatz und dem Geschäftsreiseflugzeug transportiert werden muß. Üblicherweise wurde bisher ein Patient auf einer halbsteifen Unterlage unter erheblichem, manuellen Kräfteaufwand von mehreren Personen durch die Einstiegsluke befördert. Dies bedeutet für den Patient eine besondere Streßbeanspruchung.

Aus der FR-A-2 553 046 ist eine hängende Einladevorrichtung für Patienten bekannt. Eine zweiteilige Schiene führt einen, mit Rollen versehenen Laufwagen, wobei an dem Laufwagen eine Kette mit einer sesselartigen Tragevorrichtung befestigt ist. Die Schiene ist sowohl an einem Fahrzeug befestigt als auch an ihrem, aus dem Fahrzeug herausragenden Teil am Boden abgestützt.

Eine liegende Einladevorrichtung für eine Person ist aus der DE-B- 1 160 138 bekannt. Auf einer, aus einem Fahrzeug herausziehbaren Flachschiene sind Tragarme für eine Trage fest angeordnet. Die Flachschiene ist in einer fahrzeugseitigen Führungsschiene formschlüssig verschiebbar. Eine derartige Anordnung benötigt einen großen Stauraum im Fahrzeug.

Der Erfindung liegt die Aufgabe zugrunde, eine Einladevorrichtung vorzuschlagen, mit der der Patient streßfrei in ein Luftfahrzeug ein- und ausladbar ist. Diese Einladevorrichtung soll weiterhin für das Transportpersonal kräfteschonend sein.

Die Erfindung löst diese Aufgabe entsprechend den kennzeichnenden Merkmalen des Anspruches 1.

Vorteilhafte Weiterbildung der Erfindung sind den Unteransprüchen zu entnehmen.

Die erfindungsgemäße Einladevorrichtung besteht aus wenigen, platzsparenden und leichten Bauteilen. Damit ist die Einladevorrichtung im Luftfahrzeug ohne weiteres mitführbar und benötigt nur wenig Stauraum.
Daneben ist die landeplatzseitige Einladevorrichtung in kurzer Zeit auf- und abzubauen.
Jedes Luftfahrzeug, also auch jedes Geschäftsreiseflugzeug bzw. Hubschrauber ist damit ausrüstbar, denn die erfindungsgemäße Einladevorrichtung benötigt keinen separaten Zugang. Es genügt die Breite der Einstiegsluke für den normalen Personentransport.
Patienten können ohne weiteres manuell und kräftesparend von maximal zwei Personen ein- und ausgeladen werden.
Die für den Auf- bzw. Abbau der Ladevorrichtung und das Transportieren des Patienten benötigte Zeit ist sehr kurz. Denn die Einladevorrichtung besteht aus einfachen und leichten Teilen, die auch von einem ungeübten Personal schnell und ohne weiteres handhabbar sind. Der eigentliche Transport des Patienten auf der Schiene ist rasch und kontinuierlich durchführbar, so daß der Patient keinem Streß ausgesetzt ist. Hierbei ist die Sicherheit des Patienten gewährleistet, da der Patient sowohl beim Transport über den geraden als auch über einen gebogenen Schienenabschnitt in seiner Lage in Bezug auf die Schiene in etwa rechtwinklig zur Schienenhochachse verbleibt.

Die Schienen erlauben ohne weiteres die Ausstattung von unterschiedlichen Luftfahrzeugen mit der Einladevorrichtung. Es genügt meist ein einziges gebogenes Schienenstück und mehrere gerade Schienenstücke um den schienengebundenen Transport durchführen zu können. Für die Befestigung der Schiene im Luftfahrzeug sind nur zwei Haltevorrichtungen erforderlich.

Der zweite, landeplatzseitige Abschnitt der Schiene ist selbsttragend. Zusätzliche Stützen zwischen dem landeplatzseitigen Ende der Schiene und dem im Luftfahrzeug befestigten, ersten Schienenabschnitt sind nicht erforderlich.
Dieser zweite Abschnitt besteht daher aus wenigen, schnell zu montierenden Teilen. Die Kupplungen sind einheitlich ausgebildet und alle in der selben Weise zu betätigen also sowohl bei der Montage als auch bei der Demontage.

Die Schiene ist gängige Handelsware in der Form eines Profils. Ein rechteckiges Hohlprofil mit einem Seitenverhältnis von etwa 1 : 2 entspricht den Festigkeitsanforderungen bei geringem Gewicht und der Führung der Laufwagen am besten.

Das Zweibein ist ein separates, zusammenklappbares Bauteil aus leichten Rohrprofilen mit einem plattenförmigen Endanschlag. Es ist platzsparend im Luftfahrzeug zu verstauen und über die Kupplung rasch zu montieren. Die komplett montierte Schiene ruht daher auf nur drei Stützen, nämlich zwei Stützen im Luftfahrzeug und eine Stütze am Landeplatz.

Die Laufwagen sind auf der Schiene rollengelagert und daher leichtgängig und ohne weiteres kurvengängig.

Die kurze Bauweise der Laufwagen in Schienenrichtung ist eine wichtige Voraussetzung für die Kurvengängigkeit. Es genügt ein geringes Spiel zwischen den Rollen und der Schiene. Der Laufwagen weist auf kleinstem Raum die Rollen und die Drehlagerung für die Tragarme auf.

Der kurze U-Schenkel des Laufwagens vermindert nicht nur sein Gewicht sondern ermöglicht im Luftfahrzeug die sichere Verbindung des ersten Abschnittes der Schiene mit der Flugzeugzelle. Für die Verbindung stehen daher zwei günstige, nämlich winklig zueinander liegende Flächen des rechteckigen Hohlprofils zur Verfügung.
Gerade die heckseitige Haltevorrichtung ist beim Zu- und Entladen eines Patienten wechselnden Beanspruchungen ausgesetzt.
Daneben ist gewährleistet, daß die Haltevorrichtungen die Schiene entsprechend den theoretischen, maximalen Beschleunigungen sicher mit der Luftfahrzeugzelle verbinden.

Das formschlüssige Kuppeln der Trage mit den Tragarmen der Laufwagen ist rasch und mit geringem manuellen Kräfteaufwand durchführbar.

Die am Ende der Trage zu kuppelnden Laufwagen ermöglichen eine präzise und seitenstabile Führung der Trage bei Schienen mit Bogen, insbesondere beim Durchfahren einer Einstiegsluke bei etwa horizontal gebogener Schiene.

Ausführungsbeispiele der Erfindung sind anhand der Zeichnungen nachfolgend beschrieben.

Es zeigt:
- Figur 1: ein Geschäftsreiseflugzeug mit einer Einladevorrichtung,
- Figur 2: einen Schnitt II - II nach Fig. 1,
- Figur 3: einen Schnitt III - III nach Fig. 8,
- Figur 4: eine verkleinerte Seitenansicht eines Tragarmes nach Fig. 3 im Schnitt III - III,
- Figur 5: den verkleinerten Tragarm nach Fig. 4 in einer Ansicht von oben,
- Figur 6: einen Laufwagen nach Fig. 3 in einer Ansicht von oben,
- Figur 7: eine Trage ohne Patientenaufbau,
- Figur 8: eine Einladevorrichtung entsprechend Fig. 1 mit einem gebogenen Schienenstück und
- Figur 9: eine Einladevorrichtung mit geradem Schienenstück in Verbindung mit einem Hubschrauber.

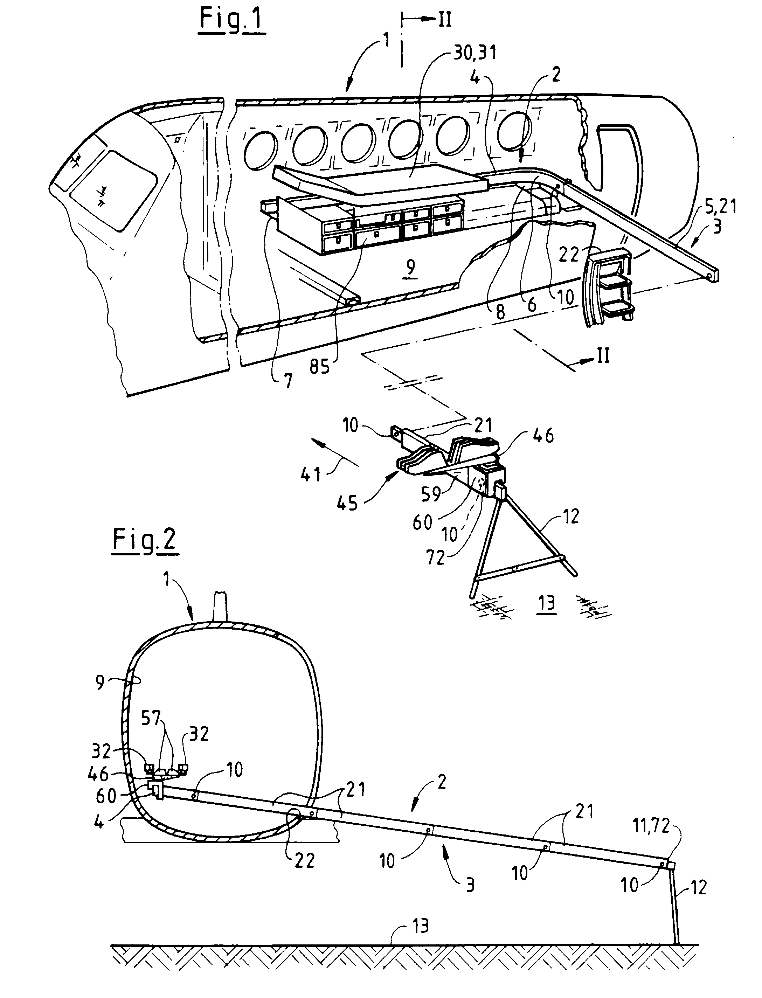

Nach Fig. 1 ist ein Geschäftsreiseflugzeug 1 mit einer Einladevorrichtung 2 entsprechend den Figuren 2 bis 8 versehen.

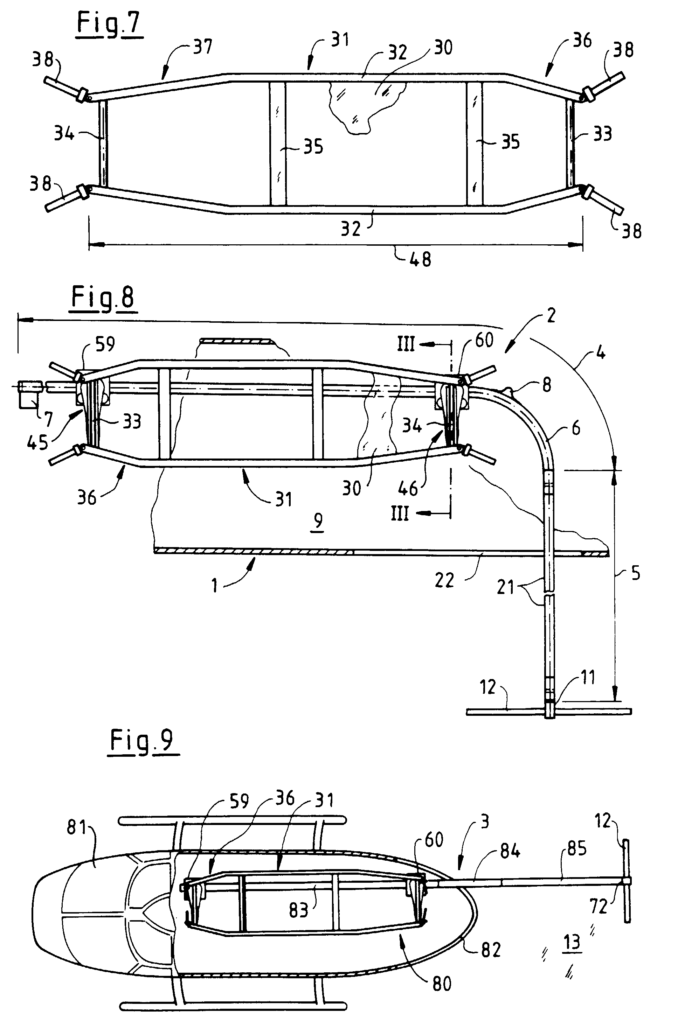

Die Einladevorrichtung 2 besteht aus einer mehrstückigen Schiene 3 mit zwei Abschnitten 4, 5 entsprechend Fig. 8.

Der Abschnitt 4 mit dem Bogen 6 ist über Haltevorrichtung 7, 8 fest mit der Zelle 9 des Geschäftsreiseflugzeuges 1 verbunden.

Der Abschnitt 5 ist einerseits mit dem Bogen 6 über eine Kupplung 10 form- und kraftschlüssig verbunden, andererseits ist das bodenseitige Ende 11 über ein zusammenklappbares Zweibein 12 am Landeplatz 13 abgestützt.

Das Zweibein 12 ist ebenso wie die separaten Teilstücke 21 des Abschnittes 5 über die Kupplung 10 fest verbunden.

Der Abschnitt 5 ist gemäß den Fig. 1 und 8 rechtsbündig durch eine serienmäßige Einstiegsluke 22 des Geschäftsreiseflugzeugs 1 geführt. Er ist freitragend.

Eine Patientenauflage 30 (Fig. 1) ist integraler Bestandteil einer Trage 31 gemäß Fig. 7. Die in Fig. 1 gezeichnete Position der Trage 31 stellt die im Transportfall gesicherte Endposition dar, wobei die Sicherungsvorrichtung nicht weiter dargestellt ist, da sie nicht in den Rahmen der Erfindung fällt.

Die Trage 31 besteht wie die Schiene 3 ebenfalls aus leichten Hohlprofilen mit Längs- und Querholmen 32 bis 35 aus Aluminium oder Titan.

Die Trage 31 weist weiterhin einen trapezförmigen Kopfteil 36 und einem ebensolchen Fußteil 37 mit jeweils zu beiden Seiten angeordneten, klappbaren Handgriffen 38 auf. Die Länge der Trage 31 ist mit 48 bezeichnet.

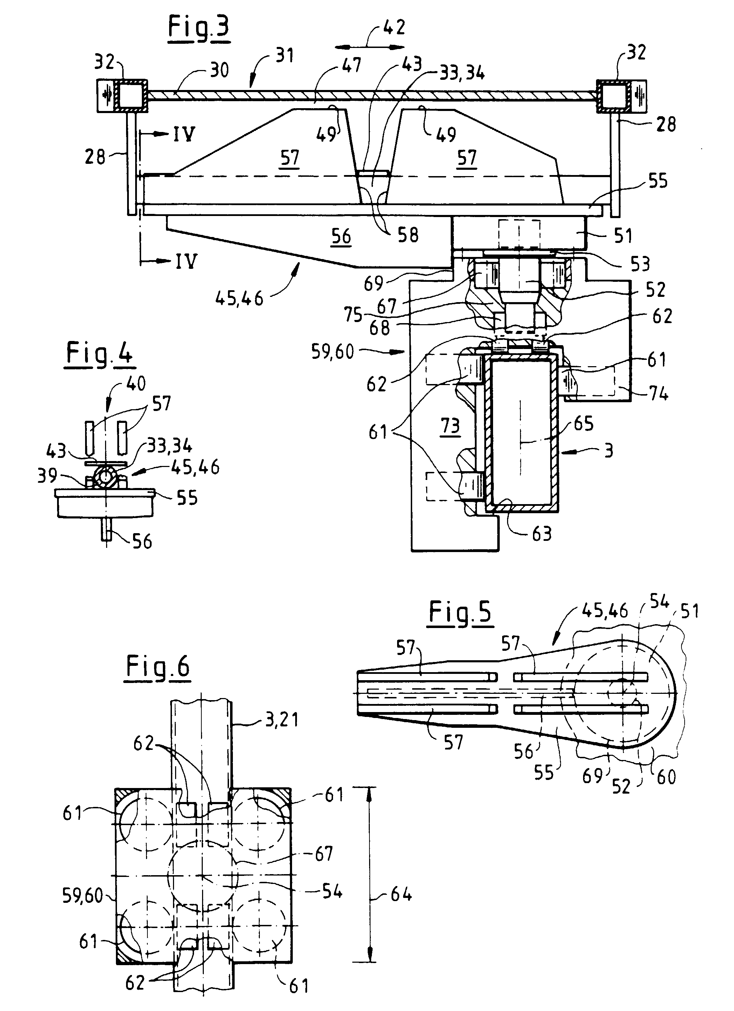

Die Querholme 33, 34 besitzen gemäß Fig. 4 einen Kreisquerschnitt 39, wobei diese Querholme 33, 34 in Richtung des Pfeiles 40 in Tragarme 45, 46 mit Spiel einsetzbar sind.

Mit den Querholmen 33, 34 und den Längsholmen 32 sind seitliche Stützen 28 fest verbunden.

Gemäß Fig. 3 befindet sich die Unterkante der Patientenauflage 30 in einem Abstand 47 von den Oberkanten 49 des Tragarmes 45, 46.

Die Tragarme 45, 46 bestehen aus einem zylindrischen Grundkörper 51 mit daran befestigtem Drehzapfen 52 und einem Bund 53. Eine Grundplatte 55 besitzt einen Steg 56 und Führungswangen 57 für die Querholme 33, 34 der Trage 31.

Die seitliche, formschlüssige Fixierung der Trage 31 in den Tragarmen 45, 46 entsprechend der Richtungen des Pfeiles 42 erfolgt durch einen Anschlag 43. Dieser liegt mit Spiel an - "nach oben" konisch sich erweiternden - Stirnseiten 58 der Seitenwangen 57 an.

Entsprechend Fig. 3 ist ein Laufwagen 59, 60 über seitliche Rollen 61, obere Rollen 62 und einen Formschluß 63 an der Schiene 3 geführt. Aufgrund des notwendigen Führungsspiels weist der Laufwagen 60 gegenüber der Hochachse 65 der Schiene 3 ein nur geringes seitliches Spiel auf.

Der Laufwagen 59 bzw. 60 umgibt die Schiene 3 von ihrer Oberseite her etwa U-förmig. Die Rollen 61, 62 stehen über die Innenseiten der U-Schenkel 73, 74 und der Basis 75 etwas hinaus.

Die Länge 64 (Fig. 6) des Laufwagens 59, 60 beträgt etwa 10% der Länge 48 (Fig. 7) der Trage 31.

Gemäß Fig. 6 ist das Drehzentrum des Drehzapfens 52 am Laufwagen 59, 60 mit 54 bezeichnet. Dementsprechend ist gemäß Fig. 3 der Drehzapfen 52 in Wälzlagern 67, 68 geführt und über den Bund 53 am Laufwagen 60 in axialer Richtung abgestützt.

Ein Schwenkbewegung der Tragarme 45, 46 gegenüber dem Laufwagen 59, 60 um das Drehzentrum 54 ermöglicht ein kreisringförmiger Bund 69 am Laufwagen 59, 60. An diesem Bund 69 stützt sich der Steg 56 ab, siehe hierzu auch Fig. 5.

Ein Anschlag 72 sichert die Laufwagen 59, 60 am freien Ende der Laufschiene 3.

### Funktion der Einladevorrichtung 2:

Der zweite Abschnitt 5 der Schiene 3, bestehend aus den Teilstücken 21 und dem Zweibein 12 wird zusammengesetzt und über die Kupplung 10 mit dem ersten Abschnitt 4 verbunden.

Die Trage 31 mit Patientenliege 30 und darauf liegendem Patienten (nicht dargestellt) wird manuell oder über eine Hubvorrichtung soweit hochgehoben, daß ihr Querholm 33 in den flugzeugseitigen Tragarm 45 "von oben" eingesetzt werden kann. Die konischen Stirnseiten 58 zentrieren und fixieren die Trage 31 bezüglich des Tragarmes 45.

Liegt der Querholm 33 auf der Grundplatte 55 des Tragarmes 45 auf (Fig. 1), so wird die Trage 31 in Richtung des Pfeiles 41 soweit mittels des Laufwagens 59 verschoben, - während der Laufwagen 60 in der gezeichneten Ausgangsposition verbleibt - bis der Querholm 34 in den gleich aufgebauten Tragarm 46 des Laufwagens 60 einsetzbar ist.
Damit ist die Trage 31 in Bezug auf die Schiene 3 positionsmäßig festgelegt und kann entsprechend der Richtung des Pfeiles 41 durch die Einstiegsluke 22, um den Bogen 6 auf den geraden Teil des Abschnittes 4 geschoben werden. Die Trage 31 ist dort in der Transportebene des Luftfahrzeuges und wird vor dem Beginn des Lufttransportes entsprechend gesichert.

Beim Durchfahren des Bogens 6 führen die Tragarme 45, 46 gegenüber den Laufwagen 59, 60 zwangsläufige Schwenkbewegungen um das jeweilige Drehzentrum 54 aus. Der Steg 56 gleitet bogenförmig an dem Bund 69 entlang.

Nach Fig. 9 ist eine Einladevorrichtung 80 in Verbindung mit einem Hubschrauber 81 dargestellt. Nachdem die Be- und Entladung eines Patienten über eine Hecköffnung 82 erfolgt, besteht die Schiene 3 aus, miteinander fluchtenden Abschnitten 83 bis 85, wobei der Abschnitt 84 - abweichend von den Abschnitten 83, 85 als vertikales Bogenstück bzw. Kurvenstück ausgebildet ist.

Die Abschnitte 84, 85 entsprechen den Teilstücken 21 bezüglich Querschnitt und gegenseitiger Befestigung.

Der wesentliche Gedanke der Erfindung ist darin zu sehen, daß eine leichtbauende, zur Trage 31 seitlich versetzte Einschienenbahn mit vorzugsweise zwei Laufwagen 59, 60 und daran schwenkbar angeordneten, einseitig frei tragenden Tragarmen 45, 46 einen Patiententransport durch schmale Einstiegsluken 22, 82 und in beengte Innenräumen von Fluggeräten 1, 81 bei geringem konstruktiven Aufwand und bei kleinem Personaleinsatz ermöglicht. Die zur Patientenliege 30 außermittige Anordnung der Laufwagen 59, 60 ergibt überraschenderweise eine Kurvengängigkeit der Einladevorrichtung 2. Diese wird noch dadurch unterstützt, daß die Trage 31 den trapezförmigen Kopfteil 36 als auch den trapezförmigen Fußteil 37 besitzt. Sowohl dieser Kopfteil 36 als auch der Fußteil 37 erleichtern das sogenannte "Ein- und Ausfädeln" an der Einstiegsluke 22. Andererseits ermöglicht die außermittige Anordnung der Laufwagen 59, 60 die Unterbringung von Staukästen 85 unterhalb der, in der Endposition gemäß Fig. 1 gesicherten Trage 31.

Neben der beschriebenen Schiene 3 kann diese aus einem Profil aus Metall, Kunststoff oder einem anderen geeigneten formstabilen und leichten Werkstoff bestehen. Als Profil eignet sich jede Form, die eine verdrehungssichere Position des Laufwagens 59 ,60 gegenüber der Schiene 3 ermöglicht. Geeignet sind hierfür T-, U- oder andersförmige, wie von der Kreisform abweichende Querschnitte geeignet.

## Patentansprüche

1. Einladevorrichtung (1; 80) für die humanitäre Luftfahrt, wobei
die Einladevorrichtung (1; 80) gebildet ist aus
einer eingleisigen, mehrteiligen Schiene (3), Stützvorrichtungen (7, 8, 12) für die Schiene (3), einer Trage (31) für eine Person und
wenigstens einem schienengebundenen Laufwagen (59, 60) mit Rollen (61, 62) und mit Tragarm (45, 46) für die Trage (31) und wobei
die Schiene (3) wenigstens aus zwei Abschnitten (4, 5; 83 - 85) besteht, einem ersten Abschnitt (4; 83), der mit dem Fahrzeug (1; 81) fest verbunden ist, und einem zweiten Abschnitt (5; 84, 85) der auf dem Boden (13) abgestützt ist; wobei der zweite Abschnitt (5; 84, 85) mit dem ersten Abschnitt (4; 83) lösbar verbunden ist,
dadurch gekennzeichnet,
daß der Tragarm (45, 46) an seiner Unterseite mit dem Laufwagen (59, 60) versehen ist und an seiner Oberseite mit der Trage (31) verbindbar ist,
wobei der Laufwagen (59, 60) die Schiene (3) von ihrer Oberseite her etwa U-förmig umgibt und die Rollen (61, 62) an den U-Schenkeln (73, 74) und an ihrer Basis (75) angeordnet sind.

2. Einladevorrichtung nach Anspruch 1,
dadurch gekennzeichnet,
daß die Schiene (3) aus wenigstens einem niveau-überwindenden bzw. schrägen Abschnitt (5; 84, 85) zur Überwindung der Höhendifferenz zwischen der Position einer auf der Trage (31) liegenden Person am Landeplatz (13) und einer Transportebene des Luftfahrzeuges (1; 81) und
aus einem etwa horizontalen, im Luftfahrzeug (1; 81) befestigten Abschnitt (4; 83) besteht.

3. Einladevorrichtung nach Anspruch 1,
dadurch gekennzeichnet,
daß der zweite Abschnitt (5) aus einzelnen Teilstücken (21) besteht, die über eine Kupplung (10) miteinander form- und kraftschlüssig verbindbar sind.

4. Einladevorrichtung nach Anspruch 1,
dadurch gekennzeichnet,
daß die Schiene (3) einen Bogen (6) aufweist.

5. Einladevorrichtung nach Anspruch 1,
dadurch gekennzeichnet,
daß die Schiene (3) aus einem Profil aus Metall, Kunststoff oder einem anderen geeigneten formstabilen und leichten Werkstoff besteht,
und daß das Profil T-, U- oder andersförmig bzw. als Hohlprofil mit rechteckigem -, von der Kreisform abweichenden Querschnitt oder einem anderen Querschnitt ausgebildet ist.

6. Einladevorrichtung nach Anspruch 1,
dadurch gekennzeichnet,
daß eine bodenseitige Stütze als zusammenklappbares Zweibein (12) mit Endanschlag (72) für die Laufwagen (59, 60) ausgebildet ist und mit dem bodensetigen Ende der Schiene (3) über eine Kupplung (10) form- und kraftschlüssig verbunden ist.

7. Einladevorrichtung nach Anspruch 1,
dadurch gekennzeichnet,
daß die Schiene (3) zwei verschiebbare Laufwagen (59, 60) mit jeweils einem schwenkbaren Tragarm (45, 46) führt, und die Tragarme (45, 46) mit der Trage (31) formschlüssig verbindbar sind,
wobei die Tragarme (45, 46) in dem Laufwagen (59, 60) über einen einzigen Drehzapfen (52) einseitig gelagert und daher einseitig freitragend ausgebildet sind, und
wobei der Tragarm (45, 46) einen Steg (56) aufweist, der an einem, zum Drehzapfen (52) konzentrischen Bund (69) des Laufwagens (59, 60) abgestützt ist.

8. Einladevorrichtung nach Anspruch 1,
dadurch gekennzeichnet,
daß der Laufwagen (59, 60) mit Rollen (61, 62) versehen ist, die den Laufwagen (59, 60) an der Schiene (3) formschlüssig führen.

9. Einladevorrichtung nach Anspruch 8,
dadurch gekennzeichnet,
daß der Laufwagen (59, 60) an seiner freitragenden Seite einen langen Schenkel (73) mit vier und gegenüber an einem kurzen Schenkel (74) mit zwei Rollen (61) versehen ist, und wobei die Basis (75) vier Rollen (62) aufweist.

10. Einladevorrichtung nach Anspruch 7,
dadurch gekennzeichnet,
daß die Länge (64) eines Laufwagens (59, 60) in Schienenrichtung etwa 10% der Länge (48) der Trage (31) entspricht.

11. Einladevorrichtung nach Anspruch 7,
dadurch gekennzeichnet,
daß die Tragarme (45, 46) zur formschlüssigen Verbindung mit der Trage (31) ein U-Profil (55, 57) oder ein anderes Profil aufweisen,
wobei ein Querholm (33, 34) der Trage (31) "von oben" in das U-Profil (55, 57) einsetzbar ist, und ein Anschlag (43) am Querholm (33, 34) an konischen Stirnseiten (58) von Führungswangen (57) die Trage (31) in Bezug auf den Tragarm (45, 46) fixiert und gegen seitliches Verschieben (Pfeilrichtung 42) sichert.

12. Einladevorrichtung nach Anspruch 7,
dadurch gekennzeichnet,
daß die beiden Laufwagen (59, 60) jeweils am Ende der Trage (31) angeordnet sind.

13. Einladevorrichtung nach Anspruch 7,
dadurch gekennzeichent,
daß die Trage (31) einen trapezförmig sich verjüngenden Kopf- und Fußteil (36, 37) aufweist.

## Claims

1. Loading device (1; 80) for humanitarian aviation, whereby
the loading device (1; 80) is formed from a single-track, multipart rail (3), supporting devices (7, 8, 12) for the rail (3), a stretcher (31) for one person and at least one rail-mounted bogie truck (59, 60) with rollers (61, 62) and with supporting arm (45, 46) for the stretcher (31) and whereby the rail (3) consists of at least two sections (4, 5; 83 - 85), a first section (4; 83), which is firmly connected with the aircraft (1; 81), and a second section (5; 84, 85) which is supported on the ground (13),
the second section (5; 84, 85) being detachably connected with the first section (4; 83),
characterized in that
the supporting arm (45, 46) is provided on its underside with the bogie truck (59, 60) and can be connected on its upper side with the stretcher (31),
whereby the bogie truck (59, 60) surrounds the rail (3) from its upper side roughly in the form of a U and the rollers (61, 62) are located on the sides (73, 74) of the U and on its base (75).

2. Loading device according to Claim 1,
characterized in that
the rail (3) consists of at least one level-overcoming or sloping section (5; 84, 85), for overcoming the difference in height between the position of a person lying on the stretcher (31) on the landing-strip (13) and a transport level of the aircraft (1; 81), and of a roughly horizontal section (4; 83) fixed in the aircraft (1; 81).

3. Loading device according to Claim 1,
characterized in that
the second section (5) consists of individual parts (21) which can be joined together positively and non-positively by way of a coupling (10).

4. Loading device according to Claim 1,
characterized in that
the rail (3) has a curve (6).

5. Loading device according to Claim 1,
characterized in that
the rail (3) consists of a profile made of metal, plastic or another suitable dimensionally stable and lightweight material,
and in that the profile is T- or U-shaped or has another shape or is constructed as a hollow profile with a rectangular cross-section diverging from the circular form or another cross-section.

6. Loading device according to Claim 1,
characterized in that
a support on the ground is constructed as a collapsible bipod (12) with end stop (72) for the bogie trucks (59, 60) and is positively and non-positively connected with the bottom end of the rail (3) by way of a coupling (10).

7. Loading device according to Claim 1,
characterized in that
the rail (3) carries two displaceable bogie trucks (59, 60) each with a swivelling supporting arm (45, 46), and the supporting arms (45, 46) can be positively connected with the stretcher (31),
whereby the supporting arms (45, 46) are mounted at one side in the bogie truck (59, 60) by way of a single pivot pin (52) and are therefore constructed so as to be unsupported on one side, and
whereby the supporting arm (45, 46) has a flange (56) which is supported on a shoulder (69) of the bogie truck (59, 60) which is concentric with the pivot pin (52).

8. Loading device according to Claim 1,
characterized in that
the bogie truck (59, 60) is provided with rollers (61, 62) which carry the bogie truck (59, 60) on the rail (3) with a positive fit.

9. Loading device according to Claim 8,
characterized in that,
on its unsupported side, the bogie truck (59, 60) is provided on a long side (73) with four rollers (61) and opposite on a short side (74) with two rollers (61), the base (75) having four rollers (62).

10. Loading device according to Claim 7,
characterized in that
the length (64) of a bogie truck (59, 60) in direction of rail corresponds to approximately 10% of the length (48) of the stretcher (31).

11. Loading device according to Claim 7,
characterized in that
the supporting arms (45, 46) for positive connection with the stretcher (31) have a U-profile (55, 57) or a different profile,
whereby a transverse spar (33, 34) of the stretcher (31) can be inserted "from above" into the U-profile (55, 57), and a stop (43) on the transverse spar (33, 34) against conical front sides (58) of guiding cheeks (57) fixes the stretcher (31) in relation to the supporting arm (45, 46) and secures it against lateral displacement (direction of arrow 42).

12. Loading device according to Claim 7,
characterized in that
the two bogie trucks (59, 50) are in each case located at the end of the stretcher (31).

13. Loading device according to Claim 1,
characterized in that
the stretcher (31) has a trapezoidal tapering head and foot section (36, 37).

## Revendications

1. Dispositif de chargement (1; 80) pour transport aérien humanitaire, le dispositif de chargement (1; 80) étant constitué
d'un rail (3) en plusieurs parties, formant une voie, de dispositifs d'appui (7, 8, 12) destinés au rail (3), d'une civière (31) conçue pour une personne et au moins un chariot (59, 60) lié au rail, équipé de galets (61, 62), et avec un bras support (45, 46) destiné à la civière (31) et où
le rail (3) est constitué d'au moins deux tronçons (4, 5; 83 - 85), d'un premier tronçon (4; 83) qui est relié rigidement au véhicule (1; 81) et d'un deuxième tronçon (5; 84, 85) qui prend appui sur le sol (13), le deuxième tronçon (5; 84, 85) étant relié de façon désolidarisable au premier tronçon (4; 83), caractérisé
en ce que le bras support (45, 46) est pourvu, sur sa face inférieure, du chariot (59, 60) et, sur sa face supérieure, de la civière (31),
le chariot (59, 60) entourant le rail (3) à peu près en forme de U depuis sa face supérieure et les galets (61, 62) étant disposés sur les branches (73, 74) et sur sa base (75).

2. Dispositif de chargement selon la revendication 1, caractérisé en ce que le rail (3) est constitué d'au moins un tronçon (5; 84, 85) surmontant les différences de niveaux, respectivement orienté obliquement, destiné à surmonter la différence de hauteur entre la position de la personne située sur le site d'atterrissage (13), couchée sur la civière (31), et un plan de transport du véhicule aérien (1; 81) et constitué d'un tronçon (4; 83) à peu près horizontal, fixé dans le véhicule aérien (1; 81).

3. Dispositif de chargement selon la revendication 1, caractérisé en ce que le deuxième tronçon (5) est constitué de pièces partielles (21) individuelles, susceptibles d'être reliées ensemble par ajustement de forme ou bien avec interaction de force, par l'intermédiaire d'un accouplement (10).

4. Dispositif de chargement selon la revendication 1, caractérisé en ce que le rail (3) présente un coude arqué (6).

5. Dispositif de chargement selon la revendication 1, caractérisé en ce que le rail (3) est constitué d'un profilé en métal, en matière plastique ou bien en un autre matériau approprié et présentant une stabilité de forme et léger, et en ce que le profil est réalisé avec une forme en T, en U ou une autre forme, respectivement sous forme de profilé creux avec une section transversale rectangulaire, différente d'une forme circulaire, ou bien avec une autre section transversale.

6. Dispositif de chargement selon la revendication 1, caractérisé en ce qu'un appui situé côté fond est réalisé, sous forme d'élément à deux pieds (12), avec une butée d'extrémité (72) destinée au chariot (59, 60) et relié, avec ajustement de forme ou avec interaction de force, à l'extrémité située côté coude arqué du rail (3), par l'intermédiaire d'un accouplement (10).

7. Dispositif de chargement selon la revendication 1, caractérisé en ce que le rail (3) assure le guidage de deux chariots (59, 60) déplaçables ayant chacun un bras support (45, 46) pivotant et les bras support (45, 46) étant susceptibles d'être reliés avec ajustement de forme à la civière (31),
les bras support (45, 46) étant montés d'un côté dans le chariot (59, 60), par l'intermédiaire d'un tourillon de rotation (59) unique, et étant réalisés de ce fait en porte-à-faux sur un côté, et
le bras support (45, 46) présentant une nervure (56) soutenue sur une collerette (69) concentrique par rapport au tenon de rotation (52), du chariot (59, 60).

8. Dispositif de chargement selon la revendication 1, caractérisé en ce que le chariot (59, 60) est pourvu de galets (61, 62) assurant un guidage avec ajustement de forme, du chariot (59, 60) sur le rail (3).

9. Dispositif de chargement selon la revendication 8, caractérisé en ce que le chariot (59, 60) est pourvu, sur son côté en porte-à-faux, d'une branche (73) longue comportant quatre galets (61) et, du côté opposé, d'une branche courte (74) comportant deux galets (61), la base (75) présentant quatre galets (62).

10. Dispositif de chargement selon la revendication 7, caractérisé en ce que la longueur (64) d'un chariot (59, 60) correspond, dans la direction du rail, à peu près à 10 % de la longueur (48) de la civière (31).

11. Dispositif de chargement selon la revendication 7, caractérisé en ce que les bras support (45, 46) présentent, pour assurer une liaison avec ajustement de forme avec la civière (31), un profilé en U (55, 57) ou bien un autre profilé,
un montant transversal (33, 34) de la civière (31) étant susceptible d'être inséré "par le haut" dans le profilé en U (55, 57) et une butée (43), prévue sur le montant transversal (33, 34), sur les faces frontales (58) coniques des joues de guidage (57), fixant la civière (31) par rapport au bras support (45, 46) et l'assurant contre tout déplacement latéral (direction de flèche 42).

12. Dispositif de chargement selon la revendication 7, caractérisé en ce que les deux chariots (59, 60) sont chacun disposés à l'extrémité de la civière (31).

13. Dispositif de chargement selon la revendication 1, caractérisé en ce que la civière (31) présente une partie tête et une partie pied (36, 37) allant en s'effilant sous une forme trapézoïdale.
